# EUROPEAN PATENT SPECIFICATION

(11) **EP 0 678 720 B1**
(45) Date of publication and mention of the grant of the patent: **22.07.1998**
(21) Application number: 95200920.7
(22) Date of filing: 12.04.1995
(51) Int. Cl.: F27D 3/00, B65G 57/30, F27D 23/02, B28B 13/04

(54) **A method and a device for cleaning kiln cars**
Verfahren und Einrichtung zur Reinigung von Ofenwagen
Méthode et appareil pour nettoyer des chariots de four

(30) Priority: 18.04.1994 NL 9400610
(43) Date of publication of application: 25.10.1995
(73) Proprietor: MACHINEFABRIEK DE OUDE RIJN PANNERDEN B.V., NL-6911 KL Pannerden (NL)
(72) Inventor: Rosendahl, Wilhelmus Martinus, NL-6924 BB Loo (NL); van Huet, Paul J.G.H., NL-6911 AP Pannerden (NL)
(74) Representative: Vollebregt, Cornelis Jacobus, Ir.

(56) References cited:
- EP-A- 0 013 037
- EP-A- 0 507 982
- DE-A- 3 126 910
- FR-A- 2 353 031

## Description

The invention relates to a method for handling of kiln cars on which rows of blocks having recesses and butting against each other are present in side-by-side relationship during normal use.

Kiln cars of this type are used for transporting bricks to be baked through a kiln. A few rows arranged side by side thereby form a supporting platform for supporting one or more stacks of stones placed side by side. Usually several such supporting platforms made up of rows of blocks arranged in side-by-side relationship are present on a kiln car, whereby the spacing between said supporting platforms is comparatively small.

In spite of the fact that the blocks making up the supporting platforms butt against each other, it cannot be avoided in practice that in use stone dust and the like penetrates between the blocks, as a result of which an intended satisfactory position of the blocks on the upper surface supporting the blocks of the kiln car in question is lost. Furthermore there is a risk of stone dust or sand penetrating between the blocks, thus causing the width of the kiln car to increase in transverse direction, which may even lead to the kiln car becoming wedged. For an efficient operation it is necessary, therefore, that the upper surface of the kiln car supporting the blocks is cleaned regularly. For this purpose the blocks resting on the kiln car have to be removed. Removing the blocks by hand and placing them back on the kiln car by hand again after cleaning takes up too much time and can only be carried out after the blocks have cooled down sufficiently. So far no suitable solution for removing the blocks mechanically has been found, particularly because of the fact that only little space for possibly accommodating suitable lifting means is present between the supporting platforms formed by the blocks, which are present on a kiln car.

According to the invention an outer row of blocks of the rows arranged in side-by-side relationship is lifted by means of a lifting device and placed on top of an adjacent row of blocks, whereupon both rows placed one on top of the other are lifted by means of said lifting device.

When using such a method use may be made of lifting means which occupy only little space, measured in a direction transversely to the longitudinal direction of a row of blocks, and which can thus be readily introduced into the space present between two supporting platforms made up of rows of blocks lying side by side, which are present on a kiln car.

Another aspect of the invention relates to a device for cleaning kiln cars, said device being provided with a frame extending over the path of movement of the kiln cars and comprising a lifting mechanism supported by said frame.

According to the invention said lifting mechanism is provided with at least one carrier which is movable in both horizontal and vertical direction and which is provided with a plurality of parallel teeth projecting from said carrier, which fit recesses in a row of blocks butting against each other and being supported by the kiln car.

With this construction the device may be of simple design, whilst an effective displacement of the blocks can still be effected in order to be able to lift the blocks from the kiln car in a simple manner.

The invention will be explained in more detail below with reference to the accompanying Figures.

Figure 1 is a schematic plan view of a device according to the invention.

Figure 2 is a side view of Figure 1, seen according to arrow II in Figure 1.

Figure 3 is a larger-scale side view of Figure 2, seen according to arrow III in Figure 2.

Figure 4 shows an embodiment of a block to be placed on a kiln car.

Figure 5 is a view of Figure 4, seen according to arrow V in Figure 4.

Figure 6 is a side view of Figure 5.

Figure 7 shows a second possible embodiment of a block to be used on a kiln car.

Figure 8 is a view of Figure 7, seen according to arrow VIII in Figure 7.

Figure 9 is a side view of Figure 8.

Figures 10 - 18 illustrate successive steps for lifting rows of blocks lying side by side.

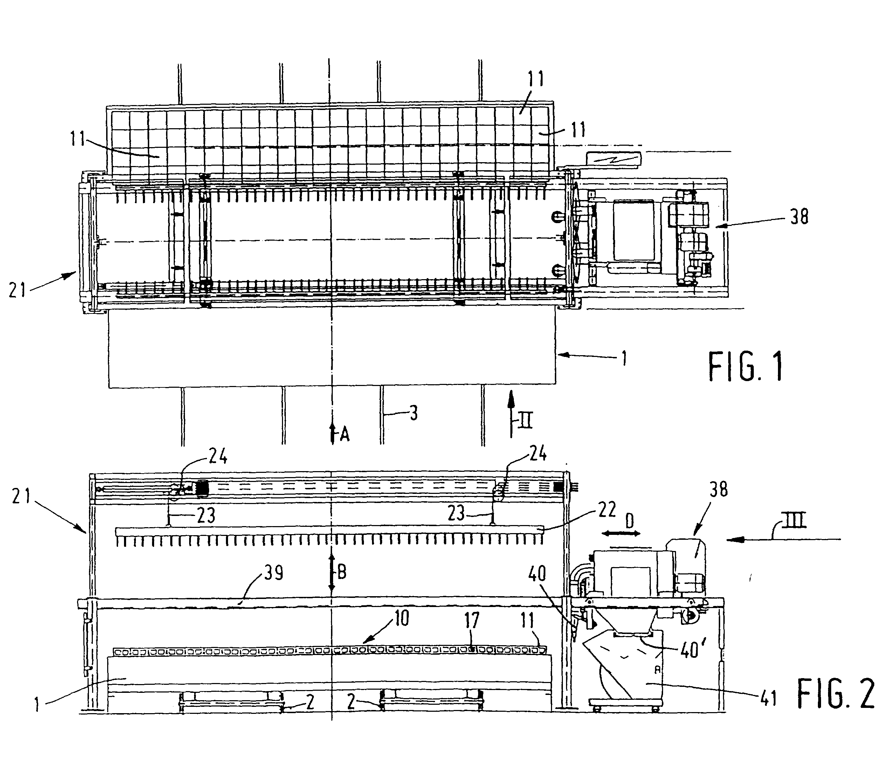

Figures 1 - 3 schematically illustrate a kiln car 1, which is supported by ground wheels 2 and which can be moved through the works over rails 3, in the direction indicated by arrow A.

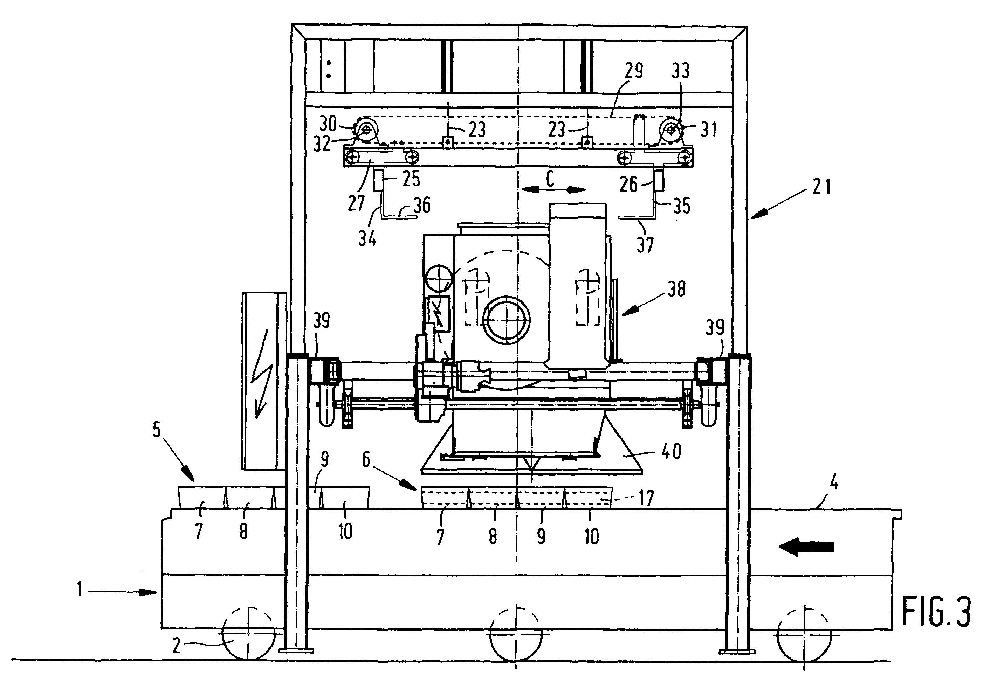

A number of supporting platforms for supporting stacks of bricks to be baked are provided on the upper surface 4 of the kiln car, only two of said supporting platforms, namely supporting platform 5 and supporting platform 6, being shown in Figure 3. In the illustrated embodiment each supporting platform 5, 6 is built up of four rows 7 - 10 of blocks 11 arranged in side-by-side relationship, which are made of a fire-resisting material. As will be apparent from the Figures, the blocks making up a single supporting platform 5, 6 butt hard against each other thereby.

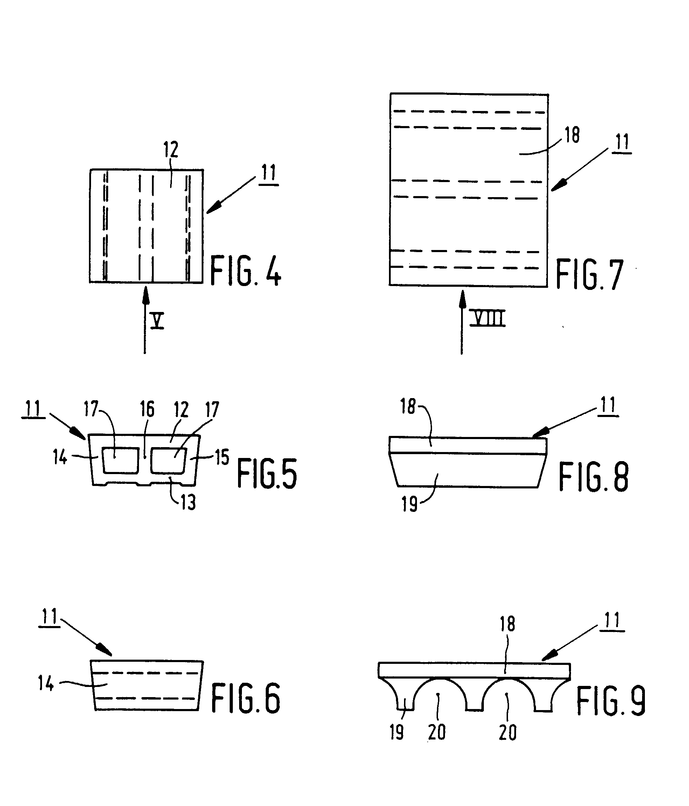

As is shown in Figures 4 - 6, a block 11 may be provided with an upper wall 12, a lower wall 13, side walls 14 and 15 interconnecting the ends of said upper wall 12 and said lower wall 13, and a partition (16) positioned between said side walls, all this in such a manner that two passages or recesses 17 extending through the block are formed in the interior of the block.

Figures 7 - 9 shows another embodiment of such a block 11. This block is substantially made up of an upper surface 18 and three legs 19 supporting said upper surface, in such a manner that two passages or recesses 20 are formed between said legs 19.

As will furthermore be apparent from Figure 2 and Figure 3 (supporting platform 6), the blocks 11 in the rows 7 - 10 arranged in side-by-side relationship of a platform are disposed in such a manner that the passages 17 or 20 of the blocks in rows 7 - 10 arranged in side-by-side relationship are in line, extending perpendicularly to the longitudinal direction of the respective rows, therefore.

The invention provides a device for lifting the blocks 11 from the upper surface 4 of the kiln car 1. Said device comprises a portal-shaped frame 21, which extends over the rails 3, as will be apparent from Figures 1 and 2.

A frame-shaped auxiliary frame 22 is supported within said frame 21 by means of cables 23, which may for example be wound on or from winch drums 24 or be movable by means of one or more setting cylinders, so that the frame-shaped frame 22 can be moved upwards and downwards, as is indicated by means of arrow B in Figure 2. Said auxiliary frame 22 supports two carriers 25 and 26 extending parallel to the rows of blocks 7 - 10. The carriers 25 and 26 are thereby connected to cars 27 and 28 respectively, sliding pieces or the like supporting means, which are supported by the auxiliary frame 22 and which are movable to and fro with respect to said auxiliary frame, as is indicated by means of arrow C in Figure 3. An endless chain 29, belt or the like is provided for moving the cars 25 and 26, said chain being passed over two chain wheels 30 and 31, pulleys or the like, which are rotatable about axes of rotation 32 and 33 respectively extending parallel to the carriers 25 and 26. As will be apparent from Figure 3, car 27 is connected to the lower part of chain 29, whilst car 28 is connected to the upper part of chain 29. The horizontally extending parts of the chain 29 can be moved to and fro by driving means, for example by a setting cylinder connected to one of said parts, as is indicated by means of arrow C. It will be apparent that the cars 27 and 28 will thereby move in a direction towards each other or away from each other.

Horizontally extending teeth 36 and 37 respectively are secured to each of said carriers 25, 26 by means of vertically extending connecting pieces 34 and 35 respectively, in such a manner that said teeth 36 and 37 extend from said connecting pieces 34 and 35 in a direction towards each other.

The number of teeth and the spacing between said teeth corresponds with the total number of recesses 17 or 20 in a row of blocks 11 lying side by side.

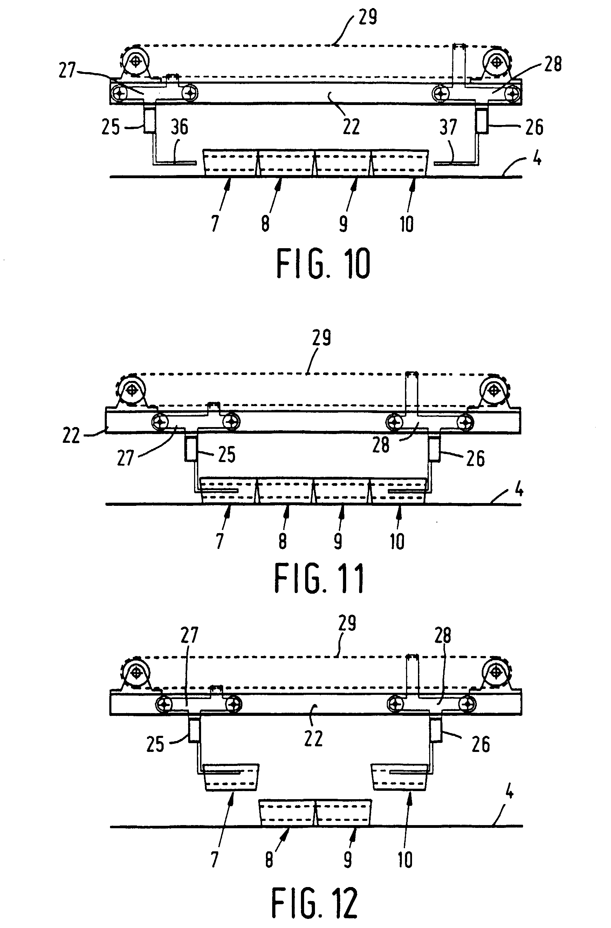

As is illustrated in Figure 10, the auxiliary frame 22 and the carriers 25 and 26 provided with teeth 36, 37, which are supported by said frame, can be moved downwards to a position in which said teeth 36 and 37 are located near the recesses provided in the blocks present on the upper surface 4. Since the length of the teeth is comparatively small, said teeth can be readily inserted into the space between two platforms 5 and 6 located side by side.

After the teeth have thus been moved to the position shown in Figure 10, said teeth 36 and 37 can be moved towards each other by driving the chain 29, as a result of which the teeth are inserted into the recess 17 or 20 of the two outer rows of blocks 7, 10 (Figure 11).

Then the auxiliary frame 22 and the carriers 25 and 26 and the teeth 36 and 37 secured to said carriers can be moved upwards, as is shown in Figure 12, so that the two outer rows of blocks are lifted from the upper surface 4 of the kiln car.

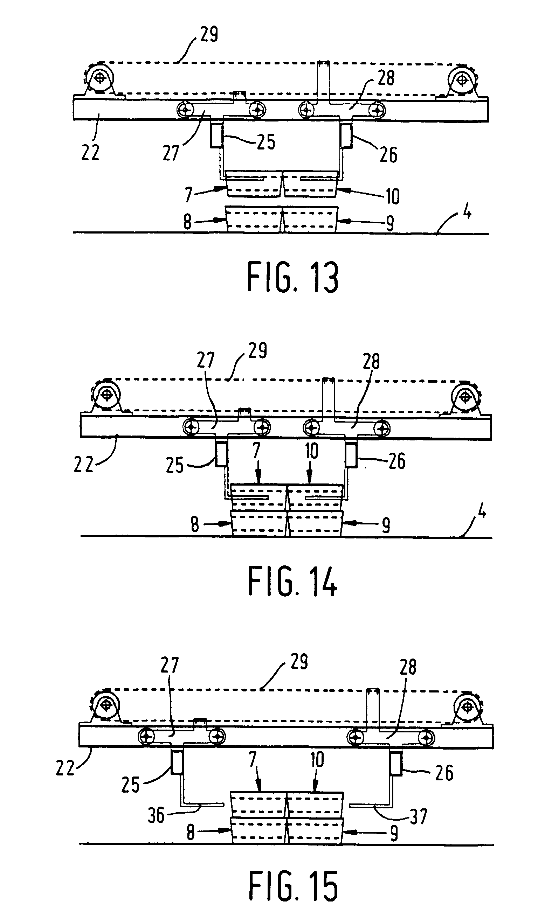

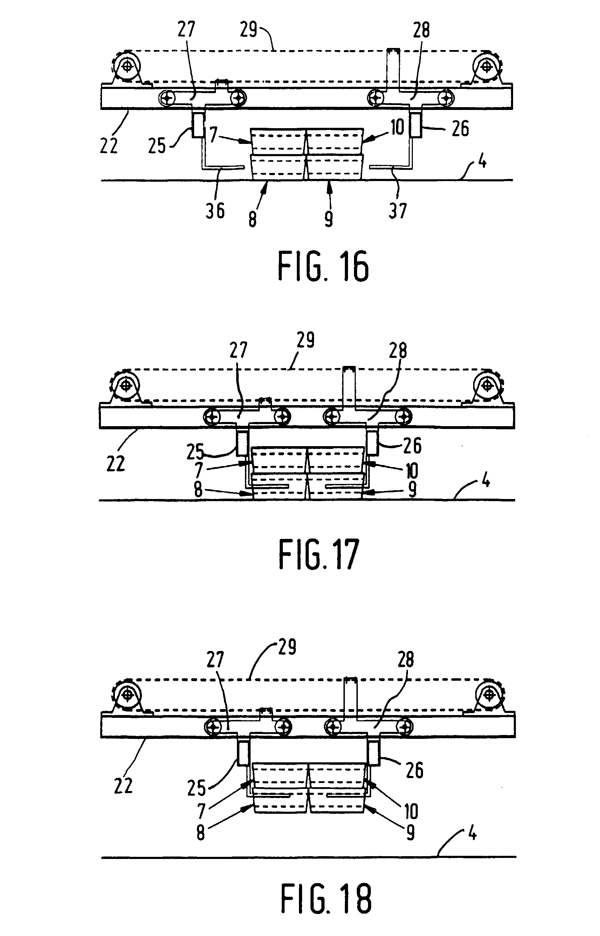

Then the two carriers 25 and 26 can be moved further towards each other by driving the chain 29, as shown in Figure 13, so that the two outer rows of blocks 7, 10 will come to lie above the inner rows of blocks 8, 9. Thereupon the two outer rows can be placed on top of the two inner rows by moving the auxiliary frame 22 downwards, as is illustrated in Figure 14. Then the teeth 36 and 37 may be retracted from the blocks again, as is shown in Figure 15, after which the frame 22 can be moved downwards again, to a position in which the teeth are positioned near the recesses in the blocks present on the upper surface 4 of the kiln car, as is shown in Figure 16. Following that the carriers 25 and 26 can be moved towards each other again, as a result of which the teeth 36 and 37 can be inserted into the recesses in the rows of blocks 8, 9 still present on the upper surface 4 of the kiln car. Subsequently the rows of blocks placed one on top of the other can all be lifted, as is shown in Figure 18.

It will be apparent that such a manner of picking up rows of blocks may also be used when for example only two rows arranged in side-by-side relationship are present, or when more than four rows arranged in side-by-side relationship are present in a platform.

After the rows of blocks of a platform have thus been lifted from the upper surface 4 of the kiln car, this part of the upper surface may be cleaned.

For this purpose the device is provided with a suction unit 38, which is movable along two beams 39, which form part of the frame 21 and which extend over the rails 3, transversly thereto. Said suction unit 38 is provided with a suction nozzle 40, which may be moved downwards to a position just above the upper surface 4 of the kiln car and in which a sub-atmospheric pressure may be generated, so that any dirt present on the upper surface 4 of the kiln car is sucked in and caught in a storage space forming part of the suction unit 38, said storage space being closed by lids 40' at its bottom side. The suction unit 38 may be moved to and fro, as is indicated by arrow D in Figure 2, in order to extract dirt present on the upper surface 4 of the car. The extracted dirt may be deposited into a bunker wagon 41 at regular intervals by opening the lids 40', by means of which bunker wagon the dirt may be discharged. It will be apparent that in the position of rest of the suction unit 38, which is illustrated in Figure 2, said suction unit occupies a position such that it does not interfere with any movement of the kiln car and/or of the auxiliary frame 22.

After the upper surface of the kiln car has thus been cleaned and the suction unit 38 has been returned to the position shown in Figure 2, the blocks 11 may be placed back on the cleaned part of the upper surface of the kiln car. It will be apparent that to this end the operations described above with reference to Figures 10 - 18 for lifting the blocks forming part of a platform will be carried out in reverse order. Thus it is possible to lift the blocks associated with the various platforms in succession and clean the cleared part of the upper surface 4 of the kiln car.

Instead of a movable suction unit it would also be possible to use a separate movable suction nozzle, which might for example be connected to a fixedly disposed suction plant via pipes.

## Claims

1. A method for handling of kiln cars (1) on which rows of blocks (11) having recesses (17) and butting against each other are present in side-by-side relationship during normal use, characterized in that an outer row (7,10) of blocks (11) of the rows (7-10) arranged in side-by-side relationship is lifted by means of a lifting device (21) and placed on top of an adjacent rows (8,9) of blocks (11), whereupon both rows (7,8;9,10) placed one on top of the other are lifted by means of said lifting device (21).

2. A method according to claim 1, characterized in that two outer rows (7,10) of blocks (11) are lifted simultaneously and subsequently placed on stop of rows of blocks (8,9) located further inwards, after which said rows of blocks (7,8;9,10) placed one on top of the other are lifted.

3. A method according to claim 1 or 2, characterized in that after said blocks (11) have been lifted a suction device (38) moves over the surface on which the blocks are present during normal use.

4. A device in particular for being used in conjunction with the method according to any one of the preceding claims, whereby said device is provided with a frame (21) extending over the path of movement of the kiln cars (1) and comprises a lifting mechanism (23,24) supported by said frame, characterized in that said lifting mechanism (23,24) is provided with at least one carrier (25,26) which is movable in both horizontal and vertical direction and which is provided with a plurality of parallel teeth (36,37) projecting from said carrier, which teeth fit recesses (17) in a row of blocks (11) butting against each other and being supported by the kiln car (1).

5. A device according to claim 4, characterized in that the lifting mechanism is provided with two carriers (25,26) supporting teeth (36,37), which carriers (25,26) can be moved towards and away from each other by means of a driving mechanism (29-31).

6. A device according to claim 5, characterized in that said carriers (25,26) are secured to supporting means (27,28), which are movable along an auxiliary frame (22), which can be moved upwards and downwards by lifting means (23,24).

7. A device according to any one of the preceding claims, characterized in that said device is provided with movable suction means (38).

## Patentansprüche

1. Verfahren zur Handhabung von Ofenwagen (1), auf denen während des normalen Gebrauchs Reihen aneinanderstoßender Blöcke (11) mit Vertiefungen (17) in nebeneinander angeordneter Beziehung vorhanden sind, dadurch gekennzeichnet, daß eine äußere Reihe (7, 10) von Blöcken (11) der nebeneinander angeordneten Reihen (7-10) mittels einer Hebevorrichtung (21) angehoben und auf der Oberseite einer benachbarten Reihe (8, 9) von Blöcken (11) abgestellt wird, worauf beide Reihen (7, 8; 9, 10), von denen eine auf der Oberseite der anderen abgestellt ist, mittels besagter Hebevorrichtung (21) angehoben werden.

2. Verfahren nach Anspruch 1, dadurch gekennzeichnet, daß zwei äußere Reihen (7, 10) von Blöcken (11) gleichzeitig angehoben und anschließend auf der Oberseite von weiter einwärts gelegenen Reihen von Blöcken (8, 9) abgestellt werden, wonach besagte Reihen von Blöcken (7, 8; 9, 10), von denen eine auf der Oberseite der anderen abgestellt ist, angehoben werden.

3. Verfahren nach Anspruch 1 oder 2, dadurch gekennzeichnet, daß, nachdem besagte Blöcke (11) angehoben wurden, sich eine Absaugvorrichtung (38) über die Fläche bewegt, auf welcher die Blöcke während des normalen Gebrauchs vorhanden sind.

4. Vorrichtung, insbesondere zur Verwendung in Verbindung mit dem Verfahren nach einem der vorstehenden Ansprüche, wobei die Vorrichtung mit einem sich über die Bewegungsbahn der Ofenwagen (1) erstreckenden Rahmen (21) versehen ist und einen durch den Rahmen getragenen Hebemechanismus (23, 24) aufweist, dadurch gekennzeichnet, daß der Hebemechanismus (23, 24) mit mindestens einem Träger (25, 26) versehen ist, der sowohl in horizontaler als auch in vertikaler Richtung bewegbar ist, und wobei der Hebemechanismus mit einer Vielzahl von dem Träger abstehenden parallelen Zähnen (36, 37) versehen ist, die in Vertiefungen (17) in einer Reihe von gegeneinander stoßenden und durch den Ofenwagen (1) getragenen Blöcke (11) passen.

5. Vorrichtung nach Anspruch 4, dadurch gekennzeichnet, daß der Hebemechanismus mit zwei Trägern (25, 26) versehen ist, die Zähne (36, 37) tragen und die mittels eines Antriebsmechanismus (29-31) aufeinander zu und voneinander weg bewegt werden können.

6. Vorrichtung nach Anspruch 5, dadurch gekennzeichnet, daß die Träger (25, 26) an tragenden Mitteln (27, 28) befestigt sind, die entlang eines Zusatzrahmens (22) bewegt werden können, der durch Hebemittel (23, 24) aufwärts und abwärts bewegt werden kann.

7. Vorrichtung nach einem der vorstehenden Ansprüche, dadurch gekennzeichnet, daß die Vorrichtung mit beweglichen Absaugmitteln (38) versehen ist.

## Revendications

1. Procédé de manutention de chariots de fours (1) sur lesquels des rangées de blocs (11) présentant des évidements (17) et étant en butée les uns contre les autres se trouvent en relation de côte à côte au cours du fonctionnement normal, caractérisé en ce qu'une rangée extérieure (7, 10) de blocs (11) des rangées (7-10) disposées en relation de côte à côte est levée au moyen d'un dispositif de levage (21) et est placée au-dessus d'une rangée adjacente (8, 9) de blocs (11), à la suite de quoi les deux rangées (7, 8 ; 9, 10) placées l'une au-dessus de l'autre sont levées au moyen dudit dispositif de levage (21).

2. Procédé selon la revendication 1, caractérisé en ce que deux rangées extérieures (7, 10) de blocs (11) sont simultanément levées et subséquemment placées au-dessus des rangées de blocs (8, 9) situées plus à l'intérieur, après quoi lesdites rangées (7, 8 ; 9, 10) de blocs placées l'une au-dessus de l'autre sont levées.

3. Procédé selon la revendication 1 ou 2, caractérisé en ce qu'après que lesdits blocs (11) ont été levés, un dispositif d'aspiration (38) se déplace sur la surface sur laquelle se trouvent les blocs au cours du fonctionnement normal.

4. Dispositif destiné, en particulier, à être utilisé conjointement avec le procédé selon l'une quelconque des revendications précédentes, ledit dispositif étant ainsi pourvu d'un bâti (21) s'étendant par-dessus le trajet de déplacement des chariots de four (1) et comprend un mécanisme de levage (23, 24) supporté par ledit bâti, caractérisé en ce que ledit mécanisme de levage (23, 24) est muni d'un transporteur (25, 26) qui est mobile à la fois dans la direction horizontale et dans la direction verticale et qui est pourvu d'une pluralité de dents parallèles (36, 37) dépassant dudit transporteur, lesquelles dents s'insèrent dans les évidements (17) d'une rangée de blocs (11) en butée les uns contre les autres et supportés par le chariot de four (1).

5. Dispositif selon la revendication 4, caractérisé en ce que le mécanisme de levage est muni de deux transporteurs (25, 26) supportant des dents (36, 37), lesquels transporteurs (25, 26) sont mobiles pour être rapprochés et éloignés l'un de l'autre au moyen d'un dispositif d'entraînement (29-31).

6. Dispositif selon la revendication 5, caractérisé en ce que lesdits transporteurs (25, 26) sont fixés à des moyens de support (27, 28) qui sont mobiles le long d'un bâti auxiliaire (22) pouvant être déplacé vers le haut et vers le bas sous l'action d'un moyen de levage (23, 24).

7. Dispositif selon l'une quelconque des revendications précédentes, caractérisé en ce que ledit dispositif est pourvu d'un moyen d'aspiration mobile (38).
